# EUROPÄISCHE PATENTSCHRIFT

(11) **EP 2 207 690 B1**
(45) Veröffentlichungstag und Bekanntmachung des Hinweises auf die Patenterteilung: **13.02.2013**
(21) Anmeldenummer: 08850575.5
(22) Anmeldetag: 22.10.2008
(51) Int. Cl.: B60G 3/20, B60G 7/00, B62D 7/18

(54) **EINZELRADAUFHÄNGUNG**
INDEPENDENT WHEEL SUSPENSION
SUSPENSION À ROUES INDÉPENDANTES

(30) Priorität: 15.11.2007 DE 102007047787
(43) Veröffentlichungstag der Anmeldung: 21.07.2010
(73) Patentinhaber: ZF Friedrichshafen AG, 88038 Friedrichshafen (DE)
(72) Erfinder: GELL, Klaus, 94130 Obernzell (DE); SOLKA, Ulrich, 94081 Fürstenzell (DE); WIMMER, Hans, 94161 Ruderting (DE)
(86) Internationale Anmeldenummer: PCT/EP2008/064250
(87) Internationale Veröffentlichungsnummer: WO 2009/062823

(56) Entgegenhaltungen:
- WO-A-2005/091699
- DE-A1-102004 014 555
- US-B1- 6 471 224

## Beschreibung

Die vorliegende Erfindung bezieht sich auf eine Einzelradaufhängung gemäß dem Oberbegriff des Patentanspruchs 1.

Aus der WO 2005/091699 A1 der Anmelderin ist beispielsweise eine Radaufhängung für ein lenkbares Fahrzeugrad bekannt, mit einem um eine Drehachse drehbar angeordneten Achsschenkel, welcher sich auf einem Träger abstützt, wobei der Träger über ein Feder-Dämpfer-Modul mit dem Fahrzeugrahmen verbunden ist.

Die bekannte Radaufhängung weist einen koaxial zur Drehachse angeordneten Achsschenkelbolzen, mindestens einen oberen Querlenker und mindestens einen unteren Querlenker auf, wobei die Querlenker mit dem Fahrzeugrahmen und über mindestens ein Verbindungsmittel mit dem Achsschenkel in Verbindung stehen. Gemäß der WO 2005/091699 A1 ist der Träger über eine koaxial zur Drehachse angeordnete Lagerung mit dem Achsschenkel verbunden, wobei die Verbindungsmittel koaxial zur Drehachse angeordnet sind und wobei die Querlenker mit den Verbindungsmitteln verbunden sind.

Des weiteren ist aus der DE 10 2004 014 555 A1 der Anmelderin eine Radaufhängung für ein lenkbares Fahrzeugrad bekannt, mit einem um eine Drehachse drehbar angeordneten Achsschenkel, der über einen Achsschenkelbolzen mit einem oberen Querlenker und einem unteren Querlenker in Verbindung steht, mit einem mit einem oberen Querlenkerlager und einem unteren Querlenkerlager, über die die Querlenker mit dem Achsschenkel in Verbindung stehen, bei der mindestens ein Querlenker einen am Querlenkerlager beginnenden Abschnitt aufweist, bei dem der Querlenker in seiner Breite nahezu gleich bleibt oder sich verschmälert. Vorzugsweise wird dieser Abschnitt durch sich überkreuzende oder durchdringende Querlenker erreicht.

Ferner ist aus der DE 100 30 028 A1 der Anmelderin eine Radaufhängung für ein gelenktes Rad eines Kraftfahrzeugs bekannt. Die bekannte Radaufhängung weist einen Radträger auf, welcher über obere Lenker und untere Lenker mit einem Chassis eines Kraftfahrzeugs verbunden ist, wobei der Radträger direkt mit einem Federträger verbunden ist. Hierbei ist der Federträger drehbar im Radträger gelagert, wobei durch die Verwendung eines Bolzens, welcher einerseits mit dem Federträger und andererseits mit dem Radträger verbunden ist, eine kompakte Radaufhängung realisiert wird.

Im Rahmen der DE 102 52 135 A1 der Anmelderin ist eine Einzelradaufhängung für Kraftfahrzeuge, insbesondere für NKWs, umfassend Achsquerlenker und Achslängslenker, beschrieben, bei der zumindest die hauptbeanspruchten Lenkerarme und -streben der Quer- und Längslenker in jedem Bereich einen Ellipsenquerschnitt aufweisen.

Der vorliegenden Erfindung liegt die Aufgabe zugrunde, ausgehend von dem erwähnten Stand der Technik, eine Einzelradaufhängung anzugeben, bei der der Achsschenkelbolzen hinsichtlich der Funktionalität optimiert wird.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Einzelradaufhängung vorgeschlagen, mit einem um eine Drehachse drehbar angeordneten Achsschenkel, welcher sich auf einem Federträger abstützt, der über einen Dämpfer und eine Luftfeder oder über ein Feder-Dämpfer-Modul mit dem Fahrzeugrahmen verbunden ist, wobei der Achsschenkel über einen Achsschenkelbolzen mit dem Federträger verbunden ist.

Hierbei weist die Einzelradaufhängung mindestens einen oberen Querlenker und mindestens einen unteren Querlenker auf, wobei die Querlenker am oberen Ende bzw. am unteren Ende des Achsschenkelbolzens gelagert sind, wobei der Achsschenkel und die Querlenker schwenkbar zum Achsschenkelbolzen gelagert und der Federträger drehfest mit dem Achsschenkelbolzen verbunden ist.

Gemäß der Erfindung bildet der Achsschenkelbolzen das Verbindungsglied für Federträger, Achsschenkel sowie oberen und unteren Querlenker, wobei er am oberen und am unteren Ende ein Lagergehäuse zur Aufnahme der Querlenkerlagerung des oberen und des unteren Querlenkers aufweist, welches mit dem Achsschenkelbolzen einstückig ausgebildet ist.

Im Rahmen einer vorteilhaften Weiterbildung der Erfindung wird vorgeschlagen, den Achsschenkelbolzen derart zu gestalten, dass er zumindest einen Lenkwinkelanschlag und/oder eine Stabilisator - Anbindung aufweist.

Die Erfindung wird im folgenden anhand der beigefügten Figuren beispielhaft näher erläutert. Es zeigen:
- Figur 1:: Eine schematische Ansicht einer Einzelradaufhängung gemäß der WO 2005/091699 A1 der Anmelderin, umfassend ein Luftfeder-Dämpfer-Modul;
- Figur 2:: Eine schematische Ansicht einer Einzelradaufhängung gemäß der WO 2005/091699 A1 der Anmelderin, umfassend eine Luftfeder und einen Dämpfer;
- Figur 3:: Eine Ansicht einer erfindungsgemäßen Ausgestaltung einer Einzelradaufhängung;
- Figur 4:: Eine perspektivische Ansicht einer erfindungsgemä-βen Ausgestaltung des Achsschenkelbolzens;
- Figur 5:: Eine Ansicht einer vorteilhaften erfindungsgemäßen Ausgestaltung des Achsschenkelbolzens;
- Figur 6:: Eine Ansicht einer weiteren vorteilhaften erfindungsgemäßen Ausgestaltung des Achsschenkelbolzens; und
- Figur 7:: Eine perspektivische Ansicht einer weiteren vorteilhaften erfindungsgemäßen Ausgestaltung des Achsschenkelbolzens.

In den Figuren sind gleiche Bauteile mit gleichen Bezugszeichen bezeichnet.

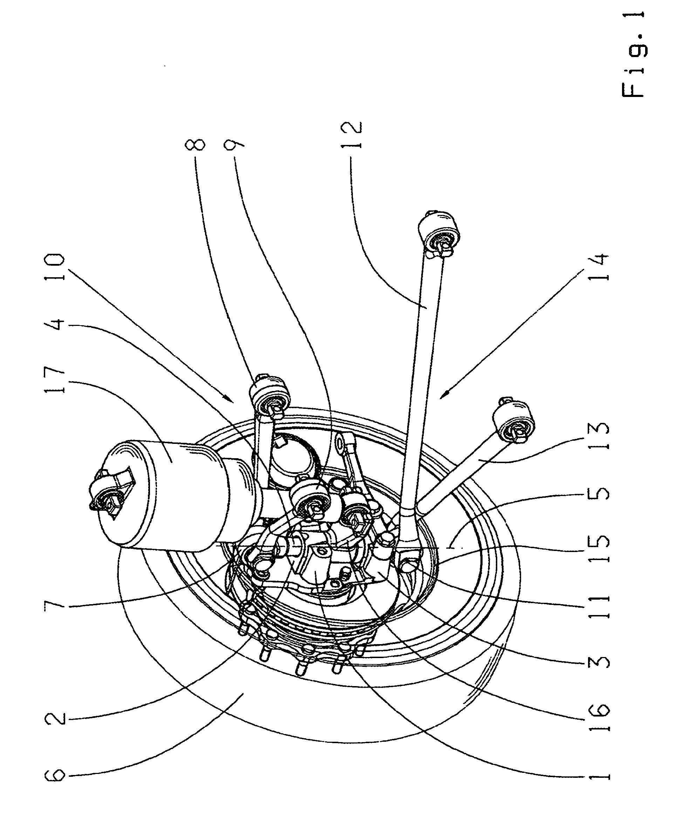

In Figur 1 ist eine Radaufhängung gemäß der WO 2005/091699 A1 der Anmelderin, umfassend ein Feder-Dämpfer-Modul schematisch dargestellt.

Hierbei weist der Achsschenkel 1 eine obere Aufnahme 2 und eine untere Aufnahme 3 auf, in welcher sich ein Achsschenkelbolzen 4 befindet, welcher koaxial zu einer Drehachse 5 angeordnet ist. Auf diese Weise kann sich der Achsschenkel 1 um die Achse 5 drehen, um Lenkbewegungen für das Fahrzeugrad 6 auszuführen.

Bei dem in Figur 1 gezeigten Beispiel weist der Achsschenkelbolzen 4 an seinem oberen Ende eine Lagerung 7 auf, welche beispielsweise als Rollenlagerung, Gleitlagerung, Kugelgelenk oder als Molekulargelenk ausgeführt sein kann, und über welche ein erster Arm 8 und ein zweiter Arm 9 eines oberen Querlenkers 10 verbunden sind. Des weiteren weist der Achsschenkelbolzen 4 an seinem unteren Ende eine Lagerung 11 auf, welche wie die Lagerung 7 ausgeführt sein kann und über die ein erster Arm 12 und ein zweiter Arm 13 eines unteren Querlenkers 14 verbunden sind. Indem die oberen Querlenker 10 und die unteren Querlenker 14 direkt mit dem Achsschenkelbolzen 4 verbunden sind, verlängern sich die Querlenker, was zu einer Verbesserung der Feder-Kinematik führt. Vorzugsweise sind die Lagerungen 7 und 11 innerhalb der Felge 15 angeordnet.

Zwischen der oberen Aufnahme 2 und der unteren Aufnahme 3 ist ein Träger bzw. Federträger 16 angeordnet, welcher mit einem Feder-Dämpfer-Modul 17 verbunden ist, so dass sich der Achsschenkel 1 über den Federträger bzw. den Träger 16 und das Feder-Dämpfer-Modul 17 an einem nicht dargestellten Fahrzeugrahmen abstützt. Der erste Arm 8 und der zweite Arm 9 sowie der erste Arm 12 und der zweite Arm 13 sind ebenfalls an einem nicht dargestellten Fahrzeugrahmen angelenkt. Wie aus Figur 1 ersichtlich sind der erste Arm 12 und der zweite Arm 13 überkreuzt angeordnet, wodurch der mögliche Lenkwinkel erhöht werden kann. Hierbei ist das Feder-Dämpfer-Modul 17 au-βerhalb des Fahrzeugrahmens und oberhalb des oberen Querlenkers 10 angeordnet.

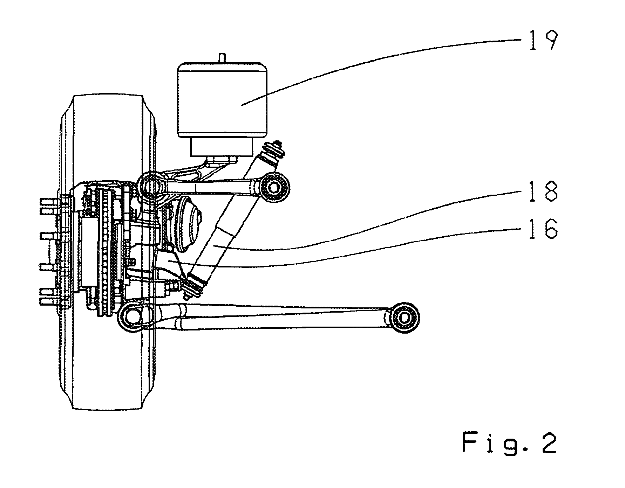

In Figur 2 ist eine Radaufhängung gezeigt, deren prinzipieller Aufbau dem Aufbau der in Figur 1 gezeigten Radaufhängung entspricht, mit dem Unterschied, dass anstelle des Feder-Dämpfer-Moduls 17 ein separater Dämpfer 18 und eine separate Luftfeder 19 verwendet werden. Auch in diesem Fall ist die Luftfeder 19 außerhalb des Fahrzeugrahmens und oberhalb des oberen Querlenkers 10 angeordnet. In den gezeigten Beispielen erfolgt die Abstützung der Radaufstandskraft zum Träger bzw. Federträger 16 und somit zum Fahrzeugrahmen über ein Axiallager.

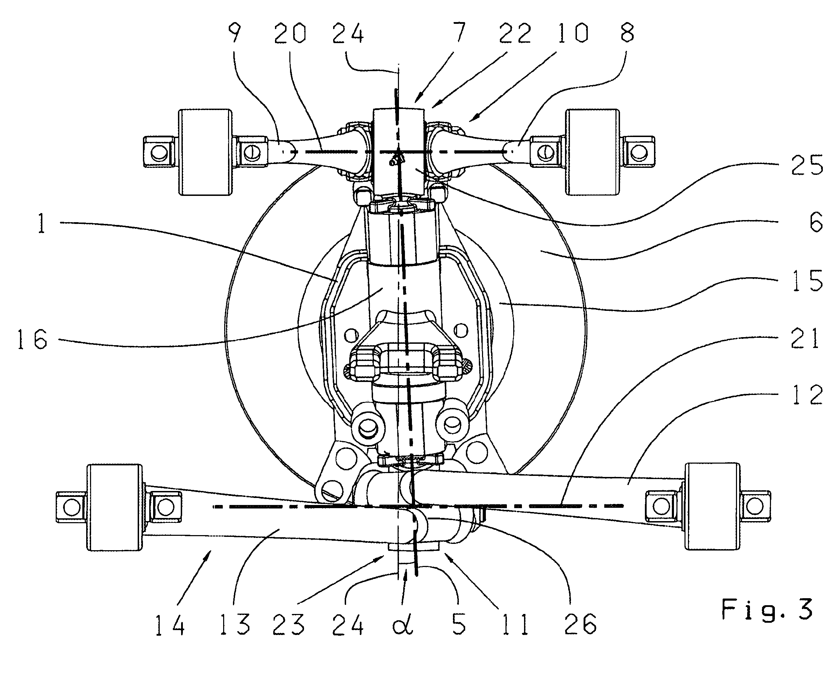

In Figur 3 ist eine Ansicht einer gemäß der Erfindung ausgeführten Einzelradaufhängung gezeigt. Hierbei ist der zweiteilig ausgeführte Achsschenkelbolzen 4, umfassend ein oberes Teil 22 und ein unteres Teil 23 derart aufgebaut, dass er das Verbindungsglied für Federträger 16, Achsschenkel 1 und oberen und unteren Querlenker 10, 14 bildet. Hierbei sind Achsschenkel 1 und Querlenker 10, 14 schwenkbar zum Achsschenkelbolzen 4 über Lagerungen 7, 11 gelagert; der Federträger 16 ist drehfest, beispielsweise über einen Presssitz, mit dem Achsschenkelbolzen 4 verbunden. Alternativ zu der zweiteiligen Ausführung kann der Achsschenkelbolzen 4 einteilig ausgeführt sein, wobei bei der zweiteiligen Ausführung vorzugsweise auch Rollenlager als Querlenkerlagerung verwendet werden können; bei der einteiligen Ausführung können die Querlenkerlagerungen 7, 11 vorzugsweise als Kugelgelenke oder Molekulargelenke ausgeführt sein.

Vorzugsweise weist der Achsschenkelbolzen am oberen und am unteren Ende ein Lagergehäuse 25 bzw. 26 zur Aufnahme der Querlenkerlagerung 7, 11 des oberen und des unteren Querlenkers 10 bzw. 14 auf, wobei die Gehäuse 25, 26 mit dem Achsschenkelbolzen einstückig ausgebildet sind.

Bei dem gezeigten Beispiel ist die Querlenkerlagermitte koaxial zur Lagerbolzenachse 5 ausgerichtet; alternativ kann die Querlenkerlagerung des oberen und/oder des unteren Querlenkers versetzt zur Achsschenkelbolzenachse angeordnet sein, wobei der Versatz entlang der Fahrzeuglängsachse und/oder entlang der Fahrzeugquerachse vorgesehen sein kann.

Der Winkel α zwischen der Senkrechten zur bolzenseitigen Querlenkerdrehachse 24 und der Achsschenkelbolzenachse 5 ist so gewählt, dass er den geforderten Achsnachlaufwinkel und die gewünschte Querlenkerausrichtung definiert; beispielsweise kann der Achsnachlaufwinkel α 2,5 ° betragen. Im Rahmen weiterer Ausführungsformen ist der α Winkel Null, wobei gemäß der Erfindung der Winkel α Werte zwischen Null und 5° annehmen kann.

Die Querlenkerdrehachse 20 oben sowie die Querlenkerdrehachse 21 unten sind vorzugsweise horizontal ausgerichtet, so dass in Abhängigkeit von der Anordnung der Querlenker mit der dargestellten Lagerbolzenform in vorteilhafter Weise eine identische Ausführung des oberen und des unteren Lagerbolzens und somit auch der Querlenker der rechten und der linken Achsseite möglich ist.

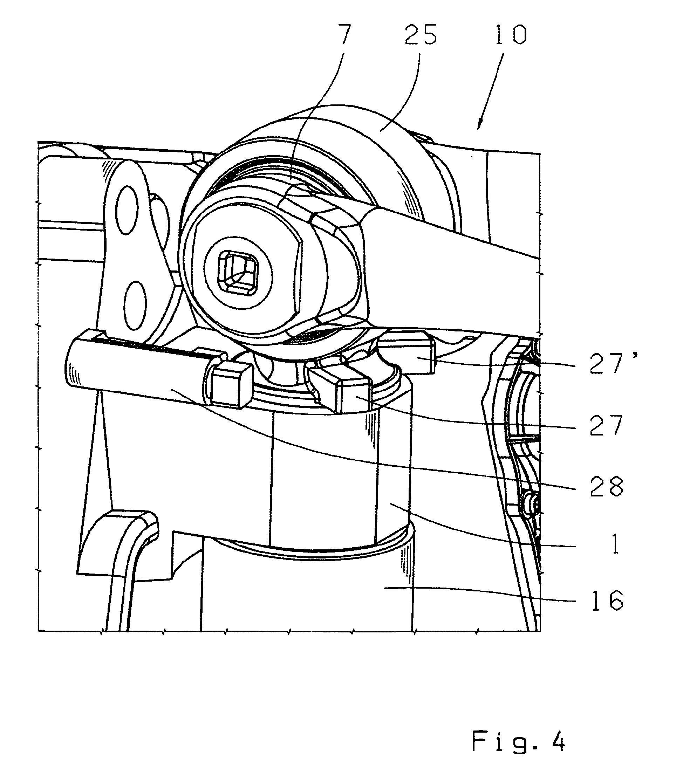

Gemäß einer vorteilhaften Weiterbildung der Erfindung weist der Achsschenkelbolzen 4 unterhalb des Lagergehäuses 25 des oberen Querlenkers 10 zumindest einen Lenkwinkelanschlag 27 für eine Lenkrichtung auf. Bei dem in Figur 4 gezeigtem Beispiel ist der Achsschenkelbolzen 4 einer in Fahrzeugvorwärtsfahrtrichtung links angeordneten Einzelradaufhängung dargestellt, welcher einen Lenkwinkelanschlag 27 für eine links-Vorwärtsfahrt und einen Lenkwinkelanschlag 27' für eine rechts-Vorwärtsfahrt aufweist, die zur Begrenzung des Lenkwinkels mit einer vorzugsweise am Achsschenkel 1 vorgesehene Lenkanschlagschraube 28 zusammenwirken.

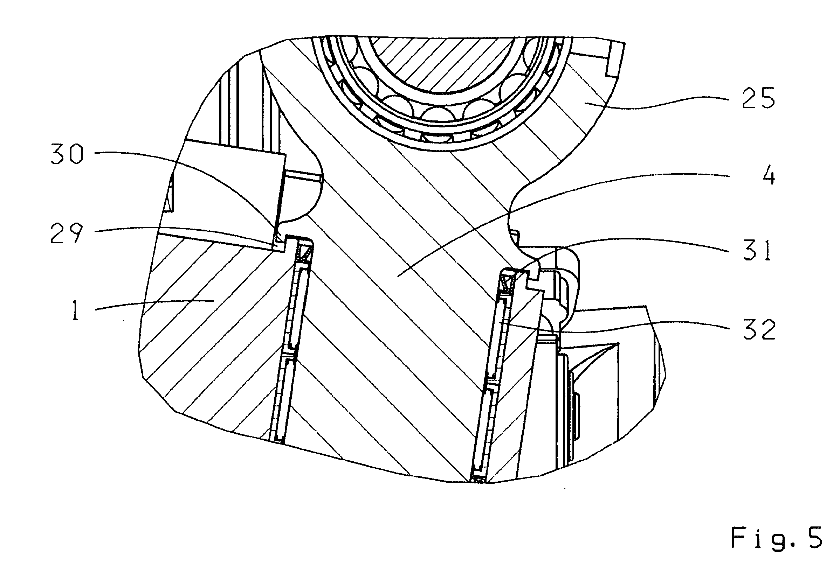

Im Rahmen einer vorteilhaften Weiterbildung der Erfindung wird vorgeschlagen, dass der Achsschenkelbolzen 4 zum Achsschenkel 1 (der um den Achsschenkelbolzen 4 drehbar gelagert ist) einen eine ringförmige Nut 29 aufweisenden Bolzenbund 30 aufweist, welcher somit ein Labyrinth zum Achsschenkel 1 bildet, wodurch die eigentliche Achsschenkelbolzenabdichtung, die vorzugsweise in Form eines Dichtrings 31 ausgeführt ist, vor grober Verschmutzung geschützt wird. Diese Ausgestaltung ist Gegenstand der Figur 5, wobei mit 32 ein Rollenlager bezeichnet ist.

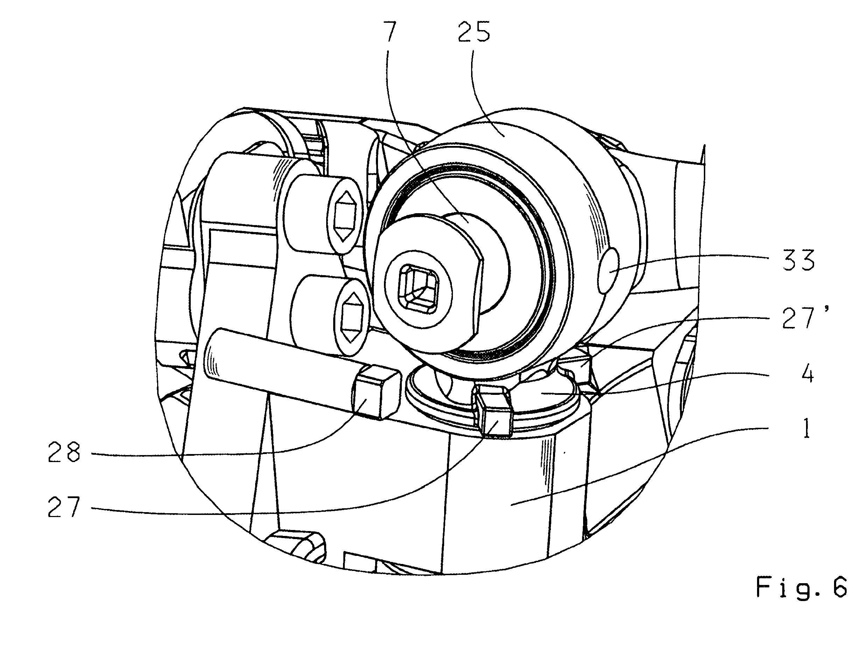

Des weiteren können die Querlenkerlagergehäuse 25 bzw. 26 zur Aufnahme der Querlenkerlagerung 7, 11 des oberen und/oder des unteren Querlenkers 10 bzw. 14 jeweils eine Aufnahmebohrung 33 für einen Schmiernippel zur Schmierung der Querlenkerlagerung 7, 11 aufweisen, wie in Figur 6 am Beispiel des oberen Lagergehäuses 25 dargestellt; für den Fall einer lebensdauergeschmierten Lagereinheit kann diese Aufnahmebohrung entfallen.

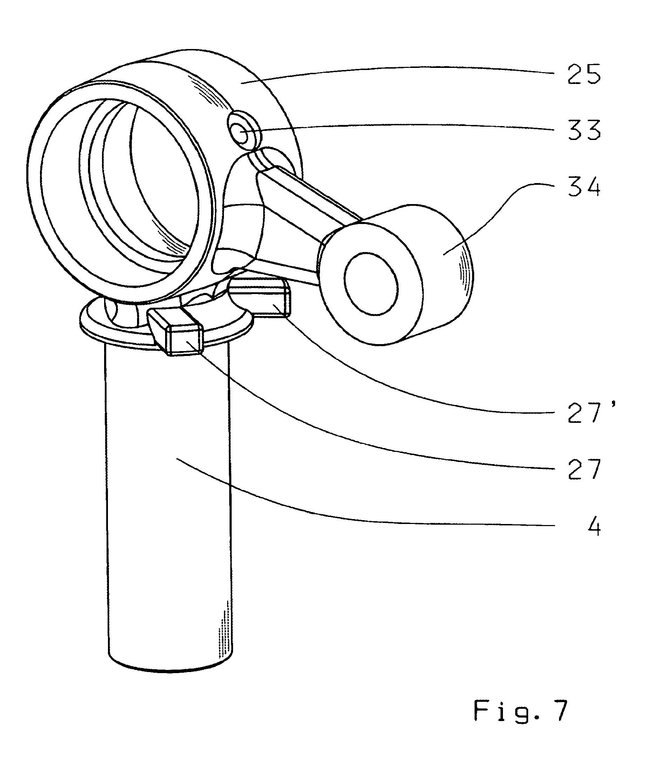

In Figur 7 ist eine weitere Ausführungsform eines Achsschenkelbolzens 4 gemäß der Erfindung dargestellt, bei der der Achsschenkelbolzen 4 zumindest eine Stabilisator-Anbindung bzw. eine Aufnahme 34 für zumindest eine nicht dargestellte Stabilisatorstrebe aufweist.

Selbstverständlich fällt auch jede konstruktive Ausbildung, insbesondere jede räumliche Anordnung der Bauteile der erfindungsgemäßen Einzelradaufhängung an sich sowie zueinander und soweit technisch sinnvoll, unter den Schutzumfang der vorliegenden Ansprüche, ohne die Funktion der Einzelradaufhängung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Achsschenkel
- 2: Aufnahme
- 3: Aufnahme
- 4: Achsschenkelbolzen
- 5: Drehachse
- 6: Fahrzeugrad
- 7: Lagerung
- 8: Querlenkerarm
- 9: Querlenkerarm
- 10: Querlenker
- 11: Lagerung
- 12: Querlenkerarm
- 13: Querlenkerarm
- 14: Querlenker
- 15: Felge
- 16: Träger
- 17: Feder-Dämpfer-Modul
- 18: Dämpfer
- 19: Luftfeder
- 20: Querlenkerdrehachse oben
- 21: Querlenkerdrehachse unten
- 22: oberer Teil des Achsschenkelbolzens 4
- 23: unterer Teil des Achsschenkelbolzens 4
- 24: Senkrechte zur bolzenseitigen Querlenkerdrehachse
- 25: Lagergehäuse
- 26: Lagergehäuse
- 27: Lenkwinkelanschlag
- 27': Lenkwinkelanschlag
- 28: Lenkanschlagschraube
- 29: ringförmige Nut
- 30: Bolzenbund
- 31: Dichtring
- 32: Rollenlager
- 33: Aufnahmebohrung
- 34: Stabilisator-Anbindung, Aufnahme

## Patentansprüche

1. Einzelradaufhängung, mit einem um eine Drehachse (5) drehbar angeordneten Achsschenkel (1), welcher sich auf einem Federträger (16) abstützt, der über einen Dämpfer (18) und eine Luftfeder (19) oder über ein Feder-Dämpfer-Modul (17) mit dem Fahrzeugrahmen verbunden ist, wobei der Achsschenkel (1) über einen Achsschenkelbolzen (4) mit dem Federträger (16) verbunden ist, wobei die Einzelradaufhängung mindestens einen oberen Querlenker (10) und mindestens einen unteren Querlenker (14) aufweist, wobei die Querlenker (10, 14) am oberen Ende bzw. am unteren Ende des Achsschenkelbolzens (4) gelagert sind, wobei der Achsschenkel (1) und die Querlenker (10, 14) schwenkbar zum Achsschenkelbolzen (4) gelagert und der Federträger (16) drehfest mit dem Achsschenkelbolzen (4) verbunden ist, wobei der Achsschenkelbolzen (4) das Verbindungsglied für Federträger (16), Achsschenkel (1) und oberen und unteren Querlenker (10, 14) bildet, wobei der Achsschenkelbolzen (4) an mindestens einem Ende ein Lagergehäuse (25) bzw. (26) zur Aufnahme der Querlenkerlagerung (7 11) des oberen oder des unteren Querlenkers (10) bzw. (14) aufweist, **dadurch gekennzeichnet, dass** das Lagergehäuse (25) bzw. (26) mit dem Achsschenkelbolzen einstückig ausgebildet ist, wobei der Achsschenkelbolzen (4) unterhalb des Lagergehäuses (25) des oberen Querlenkers (10) zumindest einen Lenkwinkelanschlag (27, 27') für eine Lenkrichtung aufweist, welcher mit einem Lenkanschlag (28) am Achsschenkel (1) zusammenwirkt.

2. Einzelradaufhängung, nach Anspruch 1, **dadurch gekennzeichnet, dass** der Winkel α zwischen der Senkrechten zur bolzenseitigen Querlenkerdrehachse (24) und der Achsschenkelbolzenachse (5) so gewählt ist, dass er den geforderten Achsnachlaufwinkel und die gewünschte Querlenkerausrichtung definiert.

3. Einzelradaufhängung, nach Anspruch 2, dadurch **gekennzeichne**t, dass der Winkel α Werte zwischen Null und 5° annimmt.

4. Einzelradaufhängung nach einem der vorangehenden Ansprüche, **dadurch gekennzeichnet, dass** die Querlenkerdrehachse (20) oben sowie die Querlenkerdrehachse (21) unten horizontal ausgerichtet sind.

5. Einzelradaufhängung nach einem der vorangehenden Ansprüche, **dadurch gekennzeichnet, dass** der Achsschenkelbolzen (4) zum Achsschenkel (1) eine ringförmige Nut (29) aufweisenden Bolzenbund (30) aufweist, welcher ein Labyrinth zum Achsschenkel (1) bildet, wodurch die eigentliche Achsschenkelbolzenabdichtung (31), vor grober Verschmutzung geschützt wird.

6. Einzelradaufhängung nach einem der vorangehenden Ansprüche, **dadurch gekennzeichnet, dass** die Querlenkerlagergehäuse (25) bzw. (26) zur Aufnahme der Querlenkerlagerung (7, 11) des oberen und/oder des unteren Querlenkers (10) bzw. (14) jeweils eine Aufnahmebohrung (33) für einen Schmiernippel zur Schmierung der Querlenkerlagerung (7, 11) aufweisen.

7. Einzelradaufhängung nach einem der vorangehenden Ansprüche, **dadurch gekennzeichnet, dass** der Achsschenkelbolzen (4) zumindest eine Stabilisator-Anbindung bzw. eine Aufnahme (34) für zumindest eine Stabilisatorstrebe aufweist.

8. Einzelradaufhängung nach einem der vorangehenden Ansprüche, **dadurch gekennzeichnet, dass** der Achsschenkelbolzen (4) ein- oder zweiteilig ausgeführt ist.

9. Einzelradaufhängung nach einem der vorangehenden Ansprüche, **dadurch gekennzeichnet, dass** die Quenenkenagermitte der Querlenkerlagerungen (7, 11) koaxial zur Lagerbolzenachse (5) ausgerichtet ist.

10. Einzelradaufhängung nach einem der vorangehenden Ansprüche 1 bis 9, **dadurch gekennzeichnet, dass** die Querlenkerlagerung (7, 11) des oberen und/oder des unteren Querlenkers versetzt zur Achsschenkelbolzenachse (5) angeordnet ist, wobei der Versatz entlang der Fahrzeuglängsachse und/oder entlang der Fahrzeugquerachse vorgesehen sein kann.

11. Einzelradaufhängung nach Anspruch 1, **dadurch gekennzeichnet, dass** bei einem zweiteiligen Achsschenkelbolzen (4) an jedem Ende ein Lagergehäuse (25) einstückig mit demAchsschenkelbolzen verbunden ist.

12. Einzelradaufhängung nach Anspruch 1, **dadurch gekennzeichnet, dass** das Lagergehäuse (25) zur Aufnahme einer Rollenlagerung ausgebildet ist.

13. Einzelradaufhängung nach Anspruch 1, **dadurch gekennzeichnet, dass** bei einem einteiligen Achsschenkelbolzen (4) an einem Ende des Achsschenkelbolzens (4) eine Verbindungsvorrichtung zur Aufnahme eines Gelenkes angeordnet ist.

## Claims

1. Independent wheel suspension, with a stub axle (1) which is arranged rotatably about an axis of rotation (5) and which is supported on a spring carrier (16) which is connected via a damper (18) and a pneumatic spring (19) or via a spring/damper module (17) to the vehicle frame, the stub axle (1) being connected to the spring carrier (16) via a stub axle kingpin (4), the independent wheel suspension having at least one upper transverse link (10) and at least one lower transverse link (14), the transverse links (10, 14) being mounted respectively at the upper end and at the lower end of the stub axle kingpin (4), the stub axle (1) and the transverse links (10, 14) being mounted pivotably with respect to the stub axle kingpin (4), and the spring carrier (16) being connected fixedly in terms of rotation to the stub axle kingpin (4), the stub axle kingpin (4) forming the connecting member for the spring carrier (16), stub axle (1) and upper and lower transverse links (10, 14), the stub axle kingpin (4) having at at least one end a bearing housing (25) and (26) for the respective reception of the transverse-link mounting (7, 11) of the upper and of the lower transverse link (10) and (14), the stub axle kingpin (4) having, below the bearing housing (25) of the upper transverse link (10), at least one steering angle stop (27, 27') for steering direction, the said steering angle stop cooperating with a steering stop (28) on the stub axle (1), **characterized in that** the bearing housing (25) or (26) is formed in one piece with the stub axle kingpin.

2. Independent wheel suspension according to Claim 1, **characterized in that** the angle α between the perpendiculars to the kingpin-side transverse-link axis of rotation (24) and the stub axle kingpin axis (5) is selected such that it defines the required axle caster angle and the desired transverse-link orientation.

3. Independent wheel suspension according to Claim 2, **characterized in that** the angle α assumes values of between zero and 5°.

4. Independent wheel suspension according to one of the preceding claims, **characterized in that** the transverse-link axis of rotation (20) at the top and the transverse-link axis of rotation (21) at the bottom are oriented horizontally.

5. Independent wheel suspension according to one of the preceding claims, **characterized in that** the stub axle kingpin (4) has with respect to the stub axle (1) a kingpin collar (30) which has an annular groove (29) and which forms a labyrinth with respect to the stub axle (1), by means of which the actual stub axle kingpin seal (31) is protected against coarse contamination.

6. Independent wheel suspension according to one of the preceding claims, **characterized in that** the transverse-link bearing housings (25) and (26) have, for receiving the transverse-link mounting (7, 11) of the upper and/or of the lower transverse link (10) and (14), in each case a reception bore (33) for a lubricating nipple for the lubrication of the transverse-link mounting (7, 11).

7. Independent wheel suspension according to one of the preceding claims, **characterized in that** the stub axle kingpin (4) has at least one stabilizer tie-up or one receptacle (34) for at least one stabilizer strut.

8. Independent wheel suspension according to one of the preceding claims, **characterized in that** the stub axle kingpin (4) is of one-part or two-part form.

9. Independent wheel suspension according to one of the preceding claims, **characterized in that** the transverse-link bearing centre of the transverse-link mountings (7, 11) is oriented coaxially to the bearing bolt axis (5).

10. Independent wheel suspension according to one of the preceding Claims 1 to 9, **characterized in that** the transverse-link mounting (7, 11) of the upper and/or of the lower transverse link is arranged so as to be offset to the stub axle kingpin axis (5), and in this case the offset may be provided along the vehicle longitudinal axis and/or along the vehicle transverse axis.

11. Independent wheel suspension according to Claim 1, **characterized in that**, in the case of a two-part stub axle kingpin (4), a bearing housing (25) is connected in one piece to the stub axle kingpin at each end.

12. Independent wheel suspension according to Claim 1, **characterized in that** the bearing housing (25) is designed for receiving a roller bearing mounting.

13. Independent wheel suspension according to Claim 1, **characterized in that**, in the case of a one-part stub axle kingpin (4), a connecting device for receiving a joint is arranged at one of the stub axle kingpin (4).

## Revendications

1. Suspension à roues indépendantes, comprenant une fusée d'essieu (1) disposée de manière à pouvoir tourner autour d'un axe de rotation (5), laquelle s'appuie sur un support de ressort (16) qui est connecté au châssis du véhicule par le biais d'un amortisseur (18) et d'un ressort pneumatique (19) ou par le biais d'un module ressort-amortisseur (17), la fusée d'essieu (1) étant connectée par le biais d'un pivot de fusée d'essieu (4) au support de ressort (16), la suspension à roues indépendante présentant au moins un bras transversal supérieur (10) et au moins un bras transversal inférieur (14), les bras transversaux (10, 14) étant supportés à l'extrémité supérieure ou à l'extrémité inférieure du pivot de fusée d'essieu (4), la fusée d'essieu (1) et les bras transversaux (10, 14) étant montés de manière pivotante par rapport au pivot de fusée d'essieu (4) et le support de ressort (16) étant connecté de manière solidaire en rotation au pivot de fusée d'essieu (4), le pivot de fusée d'essieu (4) formant l'organe de liaison pour le support de ressort (16), la fusée d'essieu (1) et les bras transversaux supérieur et inférieur (10, 14), le pivot de fusée d'essieu (4) présentant, au niveau d'au moins une extrémité, un logement de palier (25), respectivement (26) pour recevoir le support sur palier des bras transversaux (7, 11) du bras transversal supérieur (10), respectivement inférieur (14), **caractérisée en ce que** le logement de palier (25), respectivement (26) est réalisé d'une seule pièce avec le pivot de fusée d'essieu, le pivot de fusée d'essieu (4) présentant, sous le logement de palier (25) du bras transversal supérieur (10), au moins une butée d'angle de braquage (27, 27') pour une direction de braquage, qui coopère avec une butée de braquage (28) sur la fusée d'essieu (1).

2. Suspension à roues indépendantes selon la revendication 1, **caractérisée en ce que** l'angle α entre la perpendiculaire à l'axe de rotation de bras transversal (24) du côté du pivot et l'axe du pivot de fusée d'essieu (5) est choisi de telle sorte qu'il définisse l'angle de chasse de l'essieu demandé et l'orientation souhaitée des bras transversaux.

3. Suspension à roues indépendantes selon la revendication 2, **caractérisée en ce que** l'angle α prend des valeurs comprises entre zéro et 5°.

4. Suspension à roues indépendantes selon l'une quelconque des revendications précédentes, **caractérisée en ce que** l'axe de rotation de bras transversal (20) est orienté horizontalement en haut et l'axe de rotation de bras transversal (21) est orienté horizontalement en bas.

5. Suspension à roues indépendantes selon l'une quelconque des revendications précédentes, **caractérisée en ce que** le pivot de fusée d'essieu (4) présente, par rapport à la fusée d'essieu (1), un épaulement de pivot (30) présentant une rainure annulaire (29), lequel épaulement de pivot forme un labyrinthe vers la fusée d'essieu (1), de sorte que le joint d'étanchéité du pivot de fusée d'essieu (31) proprement dit soit protégé contre un encrassement.

6. Suspension à roues indépendantes selon l'une quelconque des revendications précédentes, **caractérisée en ce que** le logement de palier de bras transversal (25), respectivement (26), pour recevoir le support sur palier des bras transversaux (7, 11) du bras transversal supérieur (10) et/ou du bras transversal inférieur (14) présente à chaque fois un alésage de réception (33) pour un raccord de lubrifiant pour lubrifier le support sur palier transversal (7, 11).

7. Suspension à roues indépendantes selon l'une quelconque des revendications précédentes, **caractérisée en ce que** le pivot de fusée d'essieu (4) présente au moins une liaison de stabilisateur ou un logement (34) pour au moins une barre de stabilisateur.

8. Suspension à roues indépendantes selon l'une quelconque des revendications précédentes, **caractérisée en ce que** le pivot de fusée d'essieu (4) est réalisé en une ou deux parties.

9. Suspension à roues indépendantes selon l'une quelconque des revendications précédentes, **caractérisée en ce que** le centre d'appui de bras transversaux des supports sur palier des bras transversaux (7, 11) est disposé coaxialement à l'axe du pivot de fusée d'essieu (5).

10. Suspension à roues indépendantes selon l'une quelconque des revendications 1 à 9, **caractérisée en ce que** le support sur palier des bras transversaux (7, 11) du bras transversal supérieur et/ou du bras transversal inférieur est disposé de manière décalée par rapport à l'axe du pivot de fusée d'essieu (5), le décalage pouvant être prévu le long de l'axe longitudinal du véhicule et/ou le long de l'axe transversal du véhicule.

11. Suspension à roues indépendantes selon la revendication 1, **caractérisée en ce que** dans le cas d'un pivot de fusée d'essieu en deux parties (4), un logement de palier (25) est connecté à chaque extrémité d'une seule pièce au pivot de fusée d'essieu.

12. Suspension à roues indépendantes selon la revendication 1, **caractérisée en ce que** le logement de palier (25) est réalisé pour recevoir un support sur palier à rouleaux.

13. Suspension à roues indépendantes selon la revendication 1, **caractérisée en ce que** dans le cas d'un pivot de fusée d'essieu d'une seule pièce (4), un dispositif de liaison pour recevoir une articulation est disposé au niveau d'une extrémité du pivot de fusée d'essieu (4).
